# DEMANDE DE BREVET EUROPEEN

(11) **EP 4 714 797 A1**
(43) Date de publication de la demande: **25.03.2026**
(21) Numéro de dépôt: 24201735.8
(22) Date de dépôt: 20.09.2024
(51) Int. Cl.: B62D 35/00, B62D 35/02

(54) **VÉHICULE DOTÉ D'UN DÉFLECTEUR RÉSISTANT PLACÉ DEVANT CHAQUE ROUE AVANT**

(71) Demandeur: Renault s.a.s, 92100 Boulogne Billancourt (FR)
(72) Inventeur: HAZELARD, Fabien, 78280 GUYANCOURT (FR)

(57) **Abrégé**

L'invention concerne un Véhicule comprenant deux roues avant (2), un diffuseur(3) de bouclier avant et deux déflecteurs (1, 100) rigides placés chacun devant une roue avant (2), chacun desdits déflecteurs pouvant passer par rotation d'une position active pour laquelle il saille sous le véhicule devant une roue avant (2) en s'étendant dans un plan vertical et transversal YZ du véhicule, à une position inactive pour laquelle il s'étend horizontalement en étant rangée dans une paroi horizontale (106) dudit véhicule.

Selon l'invention, chaque déflecteur (100) est constitué d'un tronçon principal (101) composé d'éléments tubulaires souples (102) ayant des propriétés de déformation élastique, et d'un tronçon de liaison (103) monobloc rigide permettant de relier le tronçon principal (101) à l'axe de rotation (4) du déflecteur (100), le tronçon de liaison (103) étant conçu pour maintenir groupés et serrés les éléments tubulaires souples (102) du tronçon principal (101).

## Description

La présente invention concerne un véhicule doté d'un déflecteur résistant placé devant chaque roue avant.

Afin de bien comprendre le positionnement des différentes pièces impliquées dans un véhicule selon l'invention, la description est réalisée en faisant référence à un repère orthonormé direct XYZ dans lequel X est un axe longitudinal avant-arrière du véhicule orienté vers l'arrière, Y est un axe transversal orienté vers la droite du véhicule et Z est un axe vertical dirigé vers le haut.

Actuellement, certains véhicules automobiles sont dotés de deux déflecteurs placés chacun devant une roue avant, chacun desdits déflecteurs se présentant sous la forme d'un volet rigide et de faible épaisseur s'étendant dans un plan transversal et vertical YZ du véhicule. Ces volets généralement fixés à un diffuseur de bouclier avant, ont pour but de dévier l'air situé devant le véhicule lors d'une phase de roulage de celui-ci, afin que cet air n'impacte pas directement les roues avant. De cette façon, ces déflecteurs améliorent l'aérodynamisme du véhicule avec pour conséquence :
- une diminution de la consommation de carburant dudit véhicule,
- une diminution de l'émission de particules de CO2,
- une augmentation de l'autonomie du véhicule.

Il a observé que ces déflecteurs ont peu d'influence lorsque le véhicule roule à une vitesse inférieure ou égale à 70km/h, mais jouent un rôle déterminant sur la consommation de carburant lorsque ledit véhicule roule à des vitesses supérieures à 70km/h. Pour répondre à ce besoin ciblé de mise en oeuvre des déflecteurs, il a été envisagé de pouvoir piloter en rotation ces déflecteurs, entre une position active déployée et une position inactive rangée. Pour ce faire, chaque déflecteur est monté en rotation autour d'un axe de rotation transversal Y et horizontal du véhicule, et peut ainsi passer par pivotement autour dudit axe, de la position active pour laquelle il saille sous le véhicule en s'étendant dans un plan transversal et vertical YZ du véhicule, à la position inactive pour laquelle il s'étend dans un plan horizontal en étant rabattu contre une paroi horizontale du véhicule. Ces volets sont pilotés automatiquement en fonction de la vitesse du véhicule, au moyen d'une unité centrale de calcul qui est embarquée dans le véhicule.

Il est important de souligner que lorsque les déflecteurs sont dans la position active, ils sont exposés à la fois à des agressions extérieures dites normales, comme par exemple de l'eau de la neige ou des gravillons, et à des agressions extérieures accidentelles plus sévères, telles que par exemple des pierres, des branches, des animaux, etc. Or, les déflecteurs actuels, tels qu'ils sont conçus, ne vont pas résister à ces agressions accidentelles. En effet, le couple formé par la collision d'un objet volumineux sur le déflecteur rigide peut mener :
- soit à une rupture au moins partielle du déflecteur,
- soit à un endommagement du mécanisme de mise en rotation des déflecteurs,
- soit à une combinaison des deux événements précédents.

Un véhicule selon l'invention est doté de déflecteurs pilotés, conçus pour résister à des projections extérieures accidentelles, en s'affranchissant des inconvénients rencontrés dans les véhicules de l'état de la technique.

L'invention a pour objet un véhicule comprenant deux roues avant, un diffuseur de bouclier avant et deux déflecteurs rigides placés chacun devant une roue avant, chacun desdits déflecteurs étant fixé à un axe de rotation transversal Y et horizontal du véhicule qui est solidaire du diffuseur de bouclier, et pouvant passer par rotation d'une position active pour laquelle il saille sous le véhicule devant une roue avant en s'étendant dans un plan vertical et transversal YZ du véhicule, et une position inactive pour laquelle il s'étend horizontalement en étant rangée dans une paroi horizontale dudit véhicule.

Selon l'invention, chaque déflecteur est constitué d'un tronçon principale composé d'éléments tubulaires souples ayant des propriétés de déformation élastique et d'un tronçon de liaison monobloc rigide permettant de relier le tronçon principal à l'axe de rotation du déflecteur, le tronçon de liaison étant conçu pour maintenir groupés et serrés les éléments tubulaires souples du tronçon principal. Le principe d'un véhicule selon l'invention est qu'il possède deux déflecteurs placés chacun devant une roue avant, et capables de se déformer élastiquement sous l'effet d'un impact accidentel d'une projection extérieure lorsque lesdits déflecteurs sont dans la position active. Cette capacité du déflecteur à pouvoir se déformer élastiquement, permet audit déflecteur d'amortir localement le choc engendré par cette projection extérieure, sans se rompre, ni transmettre ledit choc au mécanisme de mise en rotation du déflecteur qui pourrait alors être endommagé. Après l'impact accidentel de la projection, le déflecteur reprend instantanément la même position et peut à nouveau dévier l'air de la roue avant devant laquelle il est placé, ledit déflecteur pouvant être rangé à tout moment dans la position inactive grâce au mécanisme de mise en rotation qui a été préservé. Dans le cas présent, c'est le tronçon principal du déflecteur qui va se déformer élastiquement sous l'effet de l'impact accidentel de la projection extérieure. Le tronçon de liaison a quant à lui une double fonction :
- il assure la liaison entre le tronçon principal et l'axe de rotation du déflecteur,
- il permet de maintenir groupés et serrés les éléments tubulaires et souples du tronçon principal.

Afin de lever toute ambiguïté, un déflecteur d'un véhicule selon l'invention est assimilable à un volet rigide ayant des capacités de déformation élastique. C'est grâce à la présence d'éléments tubulaires et souples que le tronçon principal du déflecteur est apte à se déformer élastiquement. Dans le même temps, il est nécessaire que les éléments tubulaires et souples soient bien serrés, pour que le déflecteur ne puisse pas laisser passer d'air et joue pleinement son rôle consistant à dévier l'air devant la roue avant.

Selon une caractéristique possible de l'invention, les éléments tubulaires souples sont parallèles et ont tous la même longueur. Il s'agit d'une configuration particulièrement adaptée à un véhicule selon l'invention, mais qui n'est nullement limitative. De cette manière, chaque déflecteur est bien délimité et possède une forme standard qui est facile à fabriquer.

Selon une caractéristique possible de l'invention, les éléments tubulaires souples sont disposés en quinconce. Il s'agit d'une configuration particulièrement adaptée à un véhicule selon l'invention, mais qui n'est nullement limitative.

Selon une caractéristique possible de l'invention, la forme de la section transversale de chaque élément tubulaire souple est à choisir parmi un cercle, un carré, un rectangle, une ellipse et une forme oblongue. Les éléments tubulaires souples sont assimilables à des brins, dont la section transversale peur adopter une multiplicité de profils qui vont notamment dépendre des efforts maximum liés à la poussée du véhicule, et que va encaisser le déflecteur. Néanmoins, tous les éléments tubulaires souples ont une section transversale identique au sein du même déflecteur.

Selon une caractéristique possible de l'invention, le tronçon de liaison a la forme d'un barreau allongé de forme parallélépipédique qui est traversé en son centre et sur toute sa longueur par l'axe de rotation, une extrémité de chaque élément tubulaire souple étant insérée dans le tronçon de liaison. De cette manière le tronçon de liaison va assurer une certaine cohésion au niveau des éléments tubulaires souples, en leur permettant d'être groupés et serrés les uns contre les autres.

Selon une caractéristique possible de l'invention, le tronçon de liaison est surmoulé sur les éléments tubulaires souples.

Selon une caractéristique possible de l'invention, au moins une bride est surmoulée autour des éléments tubulaires souples afin de compacter un peu plus lesdits éléments tubulaires souples, et réduire ainsi les sections de passage de l'air à travers le tronçon principal du déflecteur. Le déflecteur a deux exigences :
- il doit pouvoir se déformer élastiquement sous l'effet d'un impact accidentel d'une projection extérieure afin d'amortir le choc,
- il doit pouvoir dévier l'air arrivant frontalement sur la roue avant devant laquelle il est monté.

La bride qui est ainsi ajoutée au déflecteur permet d'assurer un meilleur compactage des éléments tubulaires et souples, afin de réduire voire d'annuler les interstices de passage de l'air à travers le déflecteur.

Selon une caractéristique possible de l'invention, ladite au moins une bride et le tronçon de liaison sont réalisés dans le même matériau.

Selon une caractéristique possible de l'invention, au moins une feuille rigide en polymère est intercalée entre les éléments tubulaires souples afin d'empêcher l'air de traverser le tronçon principal du déflecteur. Cette feuille rigide permet d'assurer au déflecteur une parfaite étanchéité vis-à-vis de l'air, tout en ayant des capacités de déformation élastique pour accompagner la déformation élastique du déflecteur, dans le cas d'un impact accidentel d'une projection extérieure. En effet, il ne faut pas que cette feuille rigide diminue ou supprime les capacités de déformation élastique du déflecteur. Cette feuille rigide, qui est pleine, apparait comme une aide permettant d'augmenter les propriétés d'étanchéité du déflecteur vis-à-vis de l'air incident.

Selon une caractéristique possible de l'invention, la position des déflecteurs est pilotée par une unité centrale de calcul embarquée, dont l'une des données d'entrée est la vitesse du véhicule. En effet, ces déflecteurs se mettent dans la position inactive lorsque le véhicule évolue à une vitesse inférieure à une valeur seuil, par exemple 70km/h, et dans le position active lorsque cette vitesse est supérieure à cette vitesse seuil.

On donne ci-après, une description détaillée d'un mode de réalisation préféré d'un véhicule selon l'invention, en se référant aux figures suivantes :
[Fig. 1] La figure 1 est une vue schématique d'une zone d'un véhicule selon l'état de la technique,
[Fig. 2] La figure 2 est une vue en perspective d'une zone avant d'un véhicule selon l'état de la technique montrant un déflecteur en position active,
[Fig. 3] La figure 3 est une vue en perspective d'une zone avant d'un véhicule selon l'état de la technique montrant un déflecteur en position inactive,
[Fig. 4] La figure 4 une vue en perspective d'une zone avant d'un véhicule selon l'état de la technique montrant un déflecteur en position active et son mécanisme de mise en rotation,
[Fig. 5] La figure 5 est une vue en perspective d'un premier mode de réalisation d'un déflecteur d'un véhicule selon l'invention,
[Fig. 6] La figure 6 est une vue en perspective d'un deuxième mode de réalisation d'un déflecteur d'un véhicule selon l'invention,
[Fig. 7] La figure 7 est une vue en perspective d'une zone d'un déflecteur d'un véhicule selon l'invention, montrant l'agencement des éléments tubulaires souples,
[Fig. 8] La figure 8 est une vue en perspective de différents élément tubulaires souples d'un déflecteur d'un véhicule selon l'invention,
[Fig. 9] La figure 9 est une vue en perspective en éclaté d'un troisième mode de réalisation d'un déflecteur d'un véhicule selon l'invention.

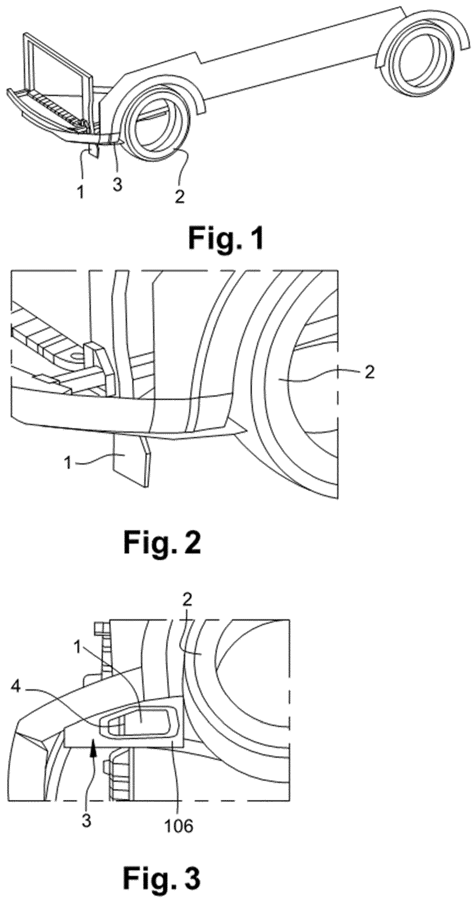

En se référant à la figure 1, certains véhicules automobiles sont dotés de deux déflecteurs 1 placés chacun devant une roue avant 2, chacun desdits déflecteurs 1 se présentant sous la forme d'un volet rigide et de faible épaisseur, s'étendant dans un plan transversal et vertical YZ du véhicule. Ces déflecteurs, qui sont généralement fixés à un diffuseur de bouclier avant 3, ont pour but de dévier l'air situé devant le véhicule lors d'une phase de roulage de celui-ci, afin que cet air n'impacte pas directement les roues avant 2 placées juste derrière lesdits déflecteurs. De cette façon, ces déflecteurs 1 améliorent l'aérodynamisme du véhicule avec pour principales conséquences :
- une diminution de la consommation de carburant dudit véhicule,
- une réduction de l'émission de particules CO2,
- une augmentation de l'autonomie du véhicule.

Il a été observé que ces déflecteurs 1 ont peu d'influence lorsque le véhicule roule à une vitesse inférieure ou égale à 70km/h, mais jouent un rôle déterminant sur l'aérodynamisme du véhicule, lorsque ledit véhicule roule à des vitesses supérieures à 70km/h. Pour répondre à ce besoin ciblé de mise en oeuvre des déflecteurs 1, il a été envisagé de pouvoir piloter en rotation ces déflecteurs 1, entre une position active déployée comme cela est illustré aux figures 1, 2, 4, et une position inactive rangée comme cela est illustré à la figure 3.

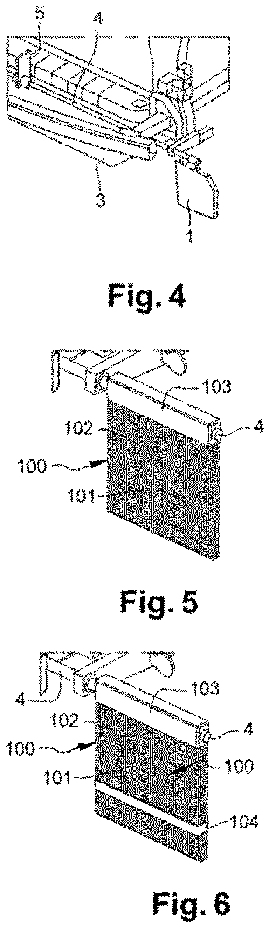

En se référant à la figure 4, chacun des deux déflecteurs 1 a une forme sensiblement rectangulaire, et est monté sur un axe de rotation 4 cylindrique, s'étendant horizontalement suivant un axe transversal Y du véhicule. Plus précisément, cet axe de rotation 4 longe l'un des côtés du déflecteur 1, si bien que ledit déflecteur 1 s'étend radialement par rapport audit axe de rotation 4. Un moteur électrique 5 permet à l'axe de rotation 4 cylindrique de pivoter autour de son axe de révolution et donc de faire pivoter simultanément le déflecteur 1 qui est fixé audit axe de rotation 4. De cette manière, grâce au déclenchement de ce moteur électrique 5, le déflecteur 1 peut passer de la position active pour laquelle il s'étend dans un plan vertical et transversal YZ du véhicule comme illustré aux figures 1, 2 et 4, à la position inactive pour laquelle il s'étend horizontalement en étant rangé dans une paroi horizontale 6 du diffuseur de bouclier avant 3. Pour passer de la position active à la position inactive ou inversement, le déflecteur 1 pivote d'un angle de 90°. Dans la position active, le déflecteur 1 dévie l'air afin que celui-ci n'impacte pas directement la roue avant 2 derrière laquelle il est situé, et dans la position inactive il n'exerce aucune influence sur le flux d'air arrivant sur ladite roue avant 2.

Il est à noter que les deux déflecteurs 1 peuvent être pilotés, soit avec deux moteurs 5 électriques distincts chacun étant affecté à un déflecteur 1 particulier, soit avec un seul moteur électrique 5 commun, comme cela est illustré à la figure 4. Dans ce deuxième cas, les deux déflecteurs 1 sont fixés au même axe de rotation 4, le moteur électrique 5 étant positionné à mi-distance entre les deux déflecteurs 1 et étant apte à mettre en rotation cet axe de rotation 4 commun, pour amener les deux déflecteurs 1 dans la position active ou dans la position inactive.

Lorsque les déflecteurs 1 sont dans la position active, ils sont exposés à la fois à des agressions extérieures dites normales, comme par exemple de l'eau de la neige ou des gravillons, et à des agressions extérieures accidentelles plus sévères, telles que par exemple des pierres, des branches, des animaux, etc. Or, les déflecteurs 1 actuels ne vont pas résister à ces agressions accidentelles. En effet, le couple formé par la collision d'un objet volumineux sur le déflecteur 1 rigide peut mener :
- soit à une rupture au moins partielle du déflecteur 1,
- soit à un endommagement du mécanisme de mise en rotation des déflecteurs 1,
- soit à une combinaison des deux événements précédents.

En se référant aux figures 5 à 9, afin de pouvoir résister efficacement à ces projections extérieures accidentelles dotées d'une énergie cinétique élevée, les déflecteurs 100 d'un véhicule selon l'invention comprennent chacun :
- un tronçon principal 101 composé d'éléments tubulaires souples 102 ayant des propriétés de déformation élastique, et
- un tronçon de liaison 103 monobloc rigide permettant de relier le tronçon principal 101 à l'axe de rotation 4 du déflecteur 100.

Le terme « souple » appliqué aux éléments tubulaires 102 du tronçon principal signifie que lesdits éléments ont une certaine tenue mécanique et qu'ils sont capables de se déformer élastiquement sous l'effet d'une sollicitation extérieure de type impact d'une projection extérieure accidentelle.

De cette manière, les deux déflecteurs 100 sont capables de se déformer élastiquement sous l'effet d'un impact accidentel d'une projection extérieure lorsque lesdits déflecteurs 100 sont dans la position active. Cette capacité du déflecteur 100 à pouvoir se déformer élastiquement, permet audit déflecteur 100 d'amortir localement le choc engendré par cette projection extérieure, sans se rompre, ni transmettre ledit choc au mécanisme de mise en rotation du déflecteur 100 qui pourrait alors être endommagé. Après l'impact accidentel de la projection extérieure accidentelle, le déflecteur 100 reprend instantanément la même forme et la même position et peut à nouveau dévier l'air de la roue avant 2, devant laquelle il est placé, ledit déflecteur 100 pouvant ensuite être rangé à tout moment dans la position inactive grâce au mécanisme de mise en rotation qui a été préservé. La capacité d'amortissement du déflecteur 100 est octroyé par les éléments tubulaires souples 102 du tronçon principal 101, qui vont d'abord se déformer élastiquement lors d'un impact d'une projection extérieure, puis retrouver instantanément leur forme initiale. Le tronçon de liaison 103 est également conçu pour maintenir groupés et serrés les éléments tubulaires souples 102 du tronçon principal.

En se référant aux figures 5, 6 et 9, les éléments tubulaires souples 102 du tronçon principal 101 sont parallèles entre eux et ont la même longueur. Ils sont disposés en quinconce. Ces éléments tubulaires souples 102, qui ont des aptitudes à la déformation élastique, sont assimilables à des brins qui sont organisés pour former un fagot dont la forme générale est parfaitement structurée.

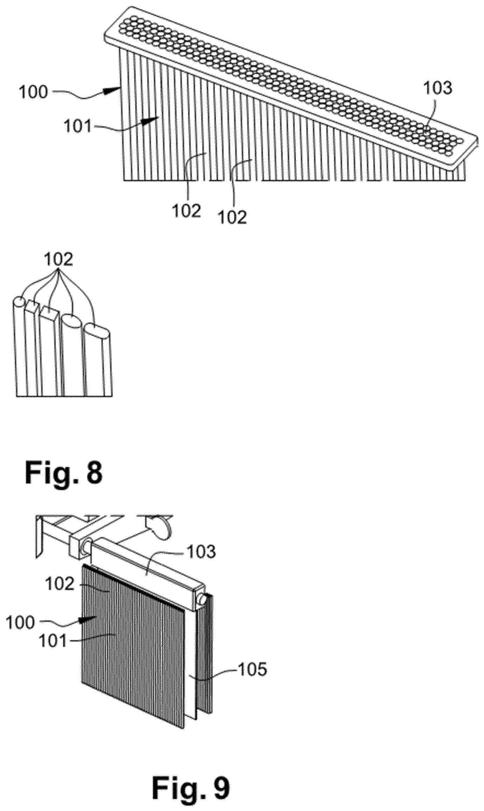

En se référant à la figure 8, en fonction des besoins rencontrés, les éléments tubulaires souples 102 du tronçon principal 101 peuvent avoir des sections transversales de forme variée : rectangulaire, carrée, elliptique, oblongue, ovale, etc. Par contre, au sein d'un même déflecteur 100, tous les éléments tubulaires souples 102 ont des sections transversales identiques en termes de forme et de dimensions.

En se référant aux figures 5, 6 et 9, le tronçon de liaison 103 est allongé et a une forme parallélépipédique. Il est traversé en son centre et sur toute sa longueur par l'axe de rotation 4 du déflecteur, l'axe de révolution dudit axe de rotation 4 étant confondu avec l'axe longitudinal et central dudit tronçon central 101.

En se référant à la figure 7, le tronçon de liaison 103 est surmoulé sur les éléments tubulaires et souples 102 du tronçon principal 101, si bien que ledit tronçon de liaison 103 a une double fonction :
- celle de relier le tronçon principal 101 à l'axe de rotation 4,
- celle de maintenir groupés et serrés les éléments tubulaires souples 102 du tronçon principal 101.

En se référant à la figure 6, puisqu'il n'est pas totalement exclu que de l'air passe à travers les éléments tubulaires souples 102 du tronçon principal 101, remettant en cause la fonction de déviation de l'air devant la roue avant 2, une bride 104 de serrage est ajoutée au tronçon principal 101 de déflecteur afin de compacter un peu plus lesdits éléments tubulaires souples 102. Cette bride 104 de serrage est assimilable à une bande de matériau fermée, ayant une forme rectangulaire. Elle entoure les éléments tubulaires souples 102 et est préférentiellement surmoulée sur les dits éléments tubulaires souples 102.

En se référant à la figure 9, un autre moyen pour empêcher l'air de traverser le tronçon principal 101 du déflecteur 100, consiste à intercaler une feuille rigide 105 en polymère entre les éléments tubulaires souples 102 du tronçon principal 101. Cette feuille rigide 105 est pleine et possède des aptitudes à la déformation élastique. Le terme « pleine » signifie que la feuille rigide 105 est dépourvue de toute ouverture, de tout trou et de tout orifice. Cette feuille rigide 105 s'étend sensiblement sur toute la surface du tronçon principal 101. Cette feuille rigide 105 va ainsi empêcher tout passage d'air à travers le tronçon principal 101 du déflecteur 100, tout en permettant audit déflecteur 100 de conserver sa fonction de déviation de l'air devant la roue avant 2 devant laquelle il est situé.

## Revendications

1. Véhicule comprenant deux roues avant (2), un diffuseur (3) de bouclier avant et deux déflecteurs (1, 100) rigides placés chacun devant une roue avant (2), chacun desdits déflecteurs (1, 100) étant fixé à un axe de rotation (4) transversal Y et horizontal du véhicule qui est solidaire du diffuseur (3) de bouclier, et pouvant passer par rotation d'une position active pour laquelle il saille sous le véhicule devant une roue avant (2) en s'étendant dans un plan vertical et transversal YZ du véhicule, à une position inactive pour laquelle il s'étend horizontalement en étant rangée dans une paroi horizontale (106) dudit véhicule, **caractérisé en ce que** chaque déflecteur (100) est constitué d'un tronçon principal (101) composé d'éléments tubulaires souples (102) ayant des propriétés de déformation élastique, et d'un tronçon de liaison (103) monobloc rigide permettant de relier le tronçon principal (101) à l'axe de rotation (4) du déflecteur (100), et **en ce que** le tronçon de liaison (103) est conçu pour maintenir groupés et serrés les éléments tubulaires souples (102) du tronçon principal (101).

2. Véhicule selon la revendication 1, **caractérisé en ce que** les éléments tubulaires souples (102) sont parallèles et ont tous la même longueur.

3. Véhicule selon la revendication 2, **caractérisé en ce que** les éléments tubulaires souples (102) sont disposés en quinconce.

4. Véhicule selon l'une quelconque des revendications 2 ou 3, **caractérisé en ce que** la forme de la section transversale de chaque élément tubulaire souple (102) est à choisir parmi un cercle, un carré, un rectangle, une ellipse et une forme oblongue.

5. Véhicule selon l'une quelconque des revendications 2 à 4, **caractérisé en ce que** le tronçon de liaison (103) a la forme d'un barreau allongé de forme parallélépipédique qui est traversé en son centre et sur toute sa longueur par l'axe de rotation (4), et **en ce qu'**une extrémité de chaque élément tubulaire souple (102) est insérée dans le tronçon de liaison (103).

6. Véhicule selon la revendication 5, **caractérisé en ce que** le tronçon de liaison (103) est surmoulé sur les éléments tubulaires souples (102).

7. Véhicule selon l'une quelconque des revendications 2 à 6, **caractérisé en ce qu'**au moins une bride (104) est surmoulée autour des éléments tubulaires souples (102) afin de compacter un peu plus lesdits éléments tubulaires souples (102) et réduire ainsi les sections de passage de l'air à travers le tronçon principal (101) du déflecteur (100).

8. Véhicule selon la revendication 7, **caractérisé en ce que** ladite au moins une bride (104) et le tronçon de liaison (103) sont réalisés dans le même matériau.

9. Véhicule selon l'une quelconque des revendications 2 à 8, **caractérisé en ce qu'**au moins une feuille rigide (105) en polymère est intercalée entre les éléments tubulaires souples (102) afin d'empêcher l'air de traverser le tronçon principal (101) du déflecteur (100).

10. Véhicule selon l'une quelconque des revendications 1 à 9, **caractérisé en ce que** la position des déflecteurs (100) est pilotée par une unité centrale de calcul embarquée, dont l'une des données d'entrée est la vitesse du véhicule.
